# EUROPÄISCHE PATENTSCHRIFT

(11) **EP 1 599 519 B1**
(45) Veröffentlichungstag und Bekanntmachung des Hinweises auf die Patenterteilung: **01.08.2012**
(21) Anmeldenummer: 04705807.8
(22) Anmeldetag: 28.01.2004
(51) Int. Cl.: C08G 18/08, C08G 18/16, C08J 3/03, C09D 175/04

(54) **VERFAHREN ZUR HERSTELLUNG WÄSSERIGER POLYURETHAN-DISPERSIONEN IN MINIEMULSION UND IN GEGENWART VON KATALYSATOR**
METHOD FOR PRODUCING AQUEOUS POLYURETHANE DISPERSIONS IN MINIEMULSION AND IN THE PRESENCE OF A CATALYST
PROCEDE DE FABRICATION DE DISPERSIONS POLYURETHANE AQUEUSES EN MINI-EMULSION ET EN PRESENCE D'UN CATALYSEUR

(30) Priorität: 28.02.2003 DE 10309204
(43) Veröffentlichungstag der Anmeldung: 30.11.2005
(73) Patentinhaber: BASF SE, 67056 Ludwigshafen (DE); Max-Planck-Gesellschaft zur Förderung der Wissenschaften e.V., 80539 München (DE)
(72) Erfinder: LICHT, Ulrike, 68309 Mannheim (DE); DEUTRICH, Susanne, 48165 Münster (DE); ANTONIETTI, Markus, 14558 Bergholz-Rehbrücke (DE); LANDFESTER, Katharina, 12203 Berlin (DE)
(74) Vertreter: Schulte, Konrad Bernhard
(86) Internationale Anmeldenummer: PCT/EP2004/000705
(87) Internationale Veröffentlichungsnummer: WO 2004/076516

(56) Entgegenhaltungen:
- EP-A- 0 685 544
- WO-A-00/29465
- WO-A-02/064657
- DE-A- 10 020 195

## Beschreibung

Die vorliegende Erfindung betrifft ein Verfahren zur Herstellung wässriger Polyurethan-Dispersionen.

Wässrige Polyurethan-Dispersionen (auch kurz als PUR-Dispersionen bezeichnet) und Verfahren zu deren Herstellung sind allgemein bekannt. Die Herstellung erfolgt dabei nach dem Acetonverfahren oder Prepolymermischverfahren. Nachteilig daran ist, dass solche Verfahren aufwendig und teuer sind, insbesondere wenn Lösemittel verwendet werden. Ausserdem handelt es sich bei den Reagenzien, über die die hydrophilen Gruppen eingeführt werden, um teure Spezialchemikalien. PUR-Dispersionen werden seit langem zur Beschichtung von Substraten wie z.B. Leder, Textilien, Holz, Metall oder Kunststoff verwendet.

Dispersionen können auch aus Miniemulsionen hergestellt werden, Miniemulsionen, die aus Wasser, einer Ölphase und einer oder mehreren oberflächenaktiven Substanzen bestehen, und die eine Tröpfchengröße von 5 bis 50 nm (Mikroemulsion) oder 50 bis 500 nm aufweisen. Miniemulsionen gelten als metastabil (P. A. Lovell, M. El-Aasser, Emulsion Polymerization and Emulsion Polymers, Verlag John Wiley and Sons, Chichester, New York, Weinheim, 1997, Seiten 700 ff., M. El-Aasser, Advances in Emulsion Polymerization and Latex Technology, 30th Annual Short Course, Vol. 3, June 7-11, 1999, Emulsion Polymers Institute, Lehigh University, Bethlehem, Pennsylvania, USA).

Aus der Literatur sind zahlreiche Verfahren zur Herstellung von wässrigen Primärdispersionen mit Hilfe der radikalischen Miniemulsionspolymerisation von olefinisch ungesättigten Monomeren bekannt (beispielsweise WO 98/02466, DE-A 196 28 143, DE-A 196 28 142, EP-A 401 565, WO 97/49739, EP-A 755 946, DE-A 199 24 674), in denen die Polyaddition von Isocyanaten mit Polyolen zu Polyurethan nicht beschrieben wird.

Dispersionen, die Polyurethane enthalten, werden z.B. in der deutschen Offenlegungsschrift DE-A 198 25 453 beschrieben. Aus der WO 00/29465 ist die nicht katalysierte Umsetzung von Isocyanat und Hydroxylverbindungen in wässrigen Miniemulsionen zu Polyurethanen bekannt.

Ferner sind Polyurethane ohne hydrophile Gruppen mit oder ohne Lösemitteln bekannt. Diese sind insbesondere aufgrund ökologischer Probleme durch ihren Einsatz von Lösemitteln oder freiem Isocyanat von Nachteil. Ausserdem weisen diese im Vergleich zu den Dispersionen niedrigere Molmassen auf.

Die Verwendung organischer Zinnverbindungen wie z.B. Dibutylzinn-dilaurat als Katalysatoren zur Herstellung von PUR-Dispersionen wird in der DE-A 199 59 653 beschrieben. Die DE-A 199 17 897 beschreibt ein Verfahren zur Herstellung von Polyurethan-Schäumen aus speziellen Polyetherolen unter Verwendung von Metallsalz-Katalysatoren, wobei insbesondere Kaliumsalze eingesetzt werden. In der älteren deutschen Patentanmeldung mit dem Aktenzeichen 10161156.0 wird die Polyaddition von Diisocyanaten und Diolen in Gegenwart eines Cäsiumsalzes beschrieben. Nachteilig an diesen Verfahren ist, dass diese über den Zwischenschritt der Herstellung eines Prepolymers durchgeführt werden.

Die WO 02/064657 lehrt die unkatalytische Herstellung von wässrigen Polyurethan-Dispersionen ohne den Zwischenschritt der Herstellung eines Prepolymers.

Der vorliegenden Erfindung lag daher die Aufgabe zugrunde, ein Verfahren zur Herstellung von Polyurethanminiemulsionen zu finden, welches die geschilderten Nachteile nicht aufweist und zu verbesserten PUR-Dispersionen führt. Insbesondere sollte eine schnelle Reaktionsführung gefunden werden, die zu einer Selektivitätssteigerung und zu höheren Molmassen der Polyurethane führt.

Die Aufgabe wurde gelöst durch ein Verfahren zur Herstellung von wässrigen Primärdispersionen, die mindestens ein hydrophobes Polyurethan enthalten, welches in Miniemulsion durch Umsetzung von wenigstens einem Polyisocyanat (a) und wenigstens einer Verbindung (b), die mindestens eine Isocyanat-reaktive Gruppe enthält, erhältlich ist, in dem man wenigstens einen Katalysator zusetzt.

Die nach dem erfindungsgemäß hergestellten PUR-Dispersionen sind schnell synthetisierbar und preiswert, da insbesondere die Vorstufe der Herstellung eines Prepolymers entfällt.

Im Rahmen der vorliegenden Erfindung ist unter der Eigenschaft hydrophil die konstitutionelle Eigenschaft eines Moleküls oder einer funktionellen Gruppe zu verstehen, in die wässrige Phase einzudringen oder darin zu verbleiben. Demgemäß wird unter der Eigenschaft hydrophob die konstitutionelle Eigenschaft eines Moleküls oder einer funktionellen Gruppe verstanden, sich gegenüber Wasser exophil zu verhalten, d. h. nicht in Wasser einzudringen oder die wässrige Phase zu verlassen. Ergänzend wird auf Römpp Lexikon Lacke und Druckfarben, Georg Thieme Verlag, Stuttgart, New York, 1998, Seiten 294 und 295 verwiesen.

Das erfindungsgemäße Verfahren findet in der Miniemulsionspolymerisation zu Polyurethanen Anwendung.

Bei diesen Verfahren wird in der Regel in einem ersten Schritt aus den Monomeren (a) und (b), der notwendigen Menge an Emulgatoren und/oder Schutzkolloid, sowie gegebenenfalls hydrophobem Zusatz und Wasser eine Mischung hergestellt und daraus eine Emulsion erzeugt.

Es wurde gefunden, dass bei Zusatz von Katalysatoren die Urethanisierung gefördert wird. Insbesondere der Zusatz von hydrophoben Katalysatoren fördert diese und unterdrückt die ungewünschte Nebenreaktion mit Wasser zu Harnstoff.

In einer bevorzugten Ausführung des erfindungsgemäßen Verfahrens wird zunächst eine Mischung aus den Monomeren (a) und (b), Emulgatoren und/oder Schutzkolloiden, sowie gegebenenfalls hydrophoben Zusatz und Wasser hergestellt. Dann wird eine Emulsion erzeugt und diese unter Rühren erwärmt. Nach Erreichen der erforderlichen Reaktionstemperatur wird der Katalysator über die Wasserphase zugegeben. Besonders bevorzugt wird ein hydrophober Katalysator über die Wasserphase zugesetzt. Die Wasserlöslichkeit des hydrophoben Katalysators liegt vorzugsweise bei ≤ 1g/l.

Durch die bevorzugte Zugabe des vorzugsweise hydrophoben Katalysators durch die Wasserphase nach der Dispergierung wird eine höhere Selektivität und eine Erhöhung der Molmasse erreicht.

Selbstverständlich kann der Katalysator aber auch schon in die Ölphase der Emulsion, d. h. in die Monomerphase, gegeben werden, bevor dispergiert wird oder sofort nach der Herstellung der Emulsion zur Wasserphase gegeben werden. Anschließend wird unter Rühren erwärmt.

Als Katalysatoren kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Di-alkylzinn(IV)-salze von organischen Carbonsäuren, z.B.Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinn-dilaurat, Zirkon-Acetylacetonat und Zirkon-2,2,6,6-tetramethyl-3,5-heptandionat.

Auch Wismut-und Cobaltkatalysatoren sowie Cäsiumsalze können als hydrophobe Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃2⁻, S²⁻, SH-, HSO₃⁻, SO₃²⁻, HSO₄⁻, SO₄²⁻, S₂O₂²⁻, S₂O₄²⁻, S₂O₅²⁻, S₂O6²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CnH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethylbutandiamin, N,N,N',N'-Tetramethylhexan-1,6-diamin, Dimethylcyclohexylamin, Dimethyldodecylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)ether, N-Ethylmorpholin, N-Methylmorpholin, N-Cyclohexylmorpholin, 2-Dimethylaminoethoxyethanol, Dimethylethanolamin, Tetramethylhexamethylendiamin, Dimethylamino-N-methylethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, Tris-(N,N-dimethylaminopropyl)-s-hexahydrotriazin, Imidazole wie 1,2-Dimethylimidazol, 4-Chlor-2,5-dimethyl-1-(N-methylaminoethyl)imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol.

Bevorzugte organische Amine sind Trialkylamine mit unabhängig voneinander zwei C₁- bis C₄-Alkylresten und einem Alkyl- oder Cycloalkylrest mit 4 bis 20 Kohlenstoffatomen, beispielsweise Dimethyl-C₄-C₁₅-Alkylamin wie Dimethyldodecylamin oder Dimethyl-C₃-C₈-Cycloalkylamin. Ebenfalls bevorzugte organische Amine sind bicyclische Amine, die gegebenenfalls ein weiteres Heteroatom wie Sauerstoff oder Stickstoff enthalten können, wie beispielsweise 1,4-Diazabicyclo-[2,2,2]-octan.

Selbstverständlich können auch Gemische aus zwei oder mehreren der genannten Verbindungen als Katalysatoren eingesetzt werden.

Besonders bevorzugt werden hydrophobe Katalysatoren aus den genannten Verbindungen verwendet.

Die Katalysatoren werden vorzugsweise in einer Menge von 0,0001 bis 10 Gew.-%, besonders bevorzugt in einer Menge von 0,001 bis 5 Gew.-%, bezogen auf die Gesamtmenge der eingesetzten Monomere, eingesetzt.

Je nach Beschaffenheit des Katalysators können diese in fester oder flüssiger Form sowie gelöst zugesetzt werden. Geeignete Lösemittel sind mit Wasser nichtmischbare Lösungsmittel wie aromatische oder aliphatische Kohlenwasserstoffe sowie Carbonsäureester wie beispielsweise Toluol, Ethylacetat, Hexan und Cyclohexan. Bevorzugt werden die Katalysatoren in fester oder flüssiger Phase zugesetzt.

In einer bevorzugten Ausführungsform der Erfindung beträgt das Verhältnis von Isocyanatgruppen (a) zu Isocyanat-reaktiven Gruppen (b) 0,8:1 bis 3:1, vorzugsweise 0,9:1 bis 1,5:1, besonders bevorzugt 1:1.

Erfindungsgemäß enthalten die wässrigen Dispersionen Polyurethane, welche aus Polyisocyanaten hergestellt werden. Als Polyisocyanate (a) kommen vorzugsweise die in der Polyurethanchemie üblicherweise eingesetzten Diisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat (HDI), Dodecamethylendiisocyanat, 1,4-Diisocyanatocyclohexan, 1-lsocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Bevorzugt werden 1-Isocyanato-3,5,5-trimethyl-5-isocyanatomethylcyclohexan (IPDI), Tetramethylxylylendiisocyanat (TMXDI), Hexamethylendiisocyanat (HDI) sowie Bis-(4-isocyanatocyclohexyl)methan (HMDI) verwendet.

Derartige Diisocyanate sind im Handel erhältlich.

Als Gemische dieser Isocyanate sind besonders die Mischungen der jeweiligen Strukturisomeren von Diisocyanatotoluol und Diisocyanatodiphenylmethan von Bedeutung, insbesondere ist die Mischung aus 80 mol-% 2,4-Diisocyanatotoluol und 20 mol-% 2,6 Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4:1 bis 1:4 beträgt.

Zum Aufbau der Polyurethane kann man als Verbindungen (a) außer den vorgenannten auch Isocyanate einsetzen, die neben den freien Isocyanatgruppen weitere verkappte Isocyanatgruppen, z.B. Isocyanurat-, Biuret-, Harnstoff-, Allophanat-, Uretdion- oder Carbodiimidgruppen tragen.

Geeignete Isocyanat-reaktive Gruppen sind beispielsweise Hydroxyl-, Thiol- sowie primäre und sekundäre Aminogruppen. Vorzugsweise werden hydroxylgruppenhaltige Verbindungen oder Monomere als Isocyanat-reaktive Verbindungen oder Monomere (b) verwendet. Daneben können auch noch aminogruppenhaltige Verbindungen als Monomere (b3) eingesetzt werden.

Bevorzugt werden als Verbindungen oder Monomere (b) Diole verwendet.

Im Hinblick auf gute Filmbildung und Elastizität kommen als Isocyanat-reaktive Gruppen enthaltende Verbindungen (b) vornehmlich höhermolekulare Diole (b1) in Betracht, die ein Molekulargewicht von etwa 500 bis 5000 g/mol, vorzugsweise von etwa 1000 bis 3000 g/mol haben.

Bei den Diolen (b1) handelt es sich insbesondere um Polyesterpolyole, die z.B. aus Ullmanns Encyklopädie der Technischen Chemie, 4. Auflage, Band 19, Seiten 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als Diole kommen z.B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentan-1,5-diol. Diese Diole können auch als Diole (b2) direkt zur Synthese der Polyurethane verwendet werden.

Ferner kommen auch Polycarbonat-Diole (b1), wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole (b1) auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,1-Bis-(4-hydroxyphenyl)propan oder Anilin erhältlich. Besonders bevorzugt ist Polytetrahydrofuran eines Molekulargewichts von 240 bis 5000 g/mol, und vor allem 500 bis 4500 g/mol. Daneben können auch Mischungen aus Polyesterdiolen und Polyetherdiolen als Monomere (b1) eingesetzt werden.

Ebenfalls geeignet sind Polyhydroxyolefine (b1), bevorzugt solche mit 2 endständigen Hydroxylgruppen, z.B. α-ω-Dihydroxypolybutadien, α-ω-Dihydroxypolymethacrylester oder α-ω-Dihydroxypolyacrylester als Monomere (b1). Solche Verbindungen sind beispielsweise aus der EP-A 622 378 bekannt. Weitere geeignete Polyole (b1) sind Polyacetale, Polysiloxane und Alkydharze.

Die Härte und der Elastizitätsmodul der Polyurethane lassen sich erhöhen, wenn als Diole (b) neben den höhermolekularen Diolen (b1) noch niedermolekulare Diole (b2) mit einem Molekulargewicht von etwa 60 bis 500 g/mol, vorzugsweise von 62 bis 200 g/mol eingesetzt werden.

Als Diole (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden. Ausserdem kommen Phenole oder Bisphenol A oder F als Diole (b2) in Betracht.

Bevorzugt beträgt der Anteil der Diole (b1), bezogen auf die Gesamtmenge der Diole (b) 0 bis 100 mol-%, insbesondere 10 bis 100 mol-%, insbesondere bevorzugt 20 bis 100 mol-%, und der Anteil der Monomere (b2), bezogen auf die Gesamtmenge der Diole (b) 0 bis 100 mol-%, insbesondere 0 bis 90 mol-%, insbesondere bevorzugt 0 bis 80 mol-%. Besonders bevorzugt beträgt das Verhältnis der Diole (b1) zu den Monomeren (b2) 1:0 bis 0:1, bevorzugt von 1:0 bis 1:10, besonders bevorzugt von 1:0 bis 1:5.

Für die Komponenten (a) und (b) können auch Funktionalitäten > 2 eingesetzt werden.

Beispiele geeigneter Monomere (b3) sind Hydrazin, Hydrazinhydrat, Ethylendiamin, Propylendiamin, Diethylentriamin, Dipropylentriamin, Isophorondiamin, 1,4-Cyclohexyldiamin, N-(2-Aminoethyl)-ethanolamin oder Piperazin.

In untergeordneter Menge können auch monofunktionelle hydroxylgruppenhaltige und/oder aminogruppenhaltige Monomere (b3) eingesetzt werden. Ihr Anteil sollte 10 mol-% bezogen auf die Komponenten (a) und (b) nicht überschreiten.

Erfindungsgemäß sind in der so hergestellten Emulsion die Durchmesser der Monomertröpfchen normalerweise < 1000 nm, häufig < 500 nm. Im Normalfall ist der Durchmesser > 40 nm. Bevorzugt sind demgemäß Werte zwischen 40 und 1000 nm. Besonders bevorzugt sind 50 - 500 nm. Ganz besonders bevorzugt ist der Bereich von 100 nm bis 300 nm und höchst bevorzugt der Bereich von 200 bis 300 nm.

Die Herstellung der Emulsion erfolgt auf an sich bekannte Weise. Die mittlere Größe der Tröpfchen der dispergierten Phase der wäßrigen Emulsion läßt sich nach dem Prinzip der quasielastischen Lichtsteuerung bestimmen (der sogenannte z-mittlere Tröpfchendurchmesser dz der unimodalen Analyse der Autokorrelationsfunktion). Beispielsweise kann dazu ein Coulter N3 Plus Particle Analyser der Fa. Coulter Scientific Instruments verwendet werden.

Zur Herstellung der Emulsion können beispielsweise Hochdruckhomogenisatoren angewendet werden. Die Feinverteilung der Komponenten wird in diesen Maschinen durch einen hohen lokalen Energieeintrag erzielt. Zwei Varianten haben sich diesbezüglich besonders bewährt:
Bei der ersten Variante wird die wässrige Makroemulsion z.B. über eine Kolbenpumpe auf über 1000 bar verdichtet und anschließend durch einen engen Spalt entspannt.
Die Wirkung beruht hier auf einem Zusammenspiel von hohen Scher- und Druckgradienten und Kavitation im Spalt. Ein Beispiel für einen Hochdruckhomogenisator, der nach diesem Prinzip funktioniert, ist der Niro-Soavi Hochdruckhomogenisator Typ NS1001L Panda.

Bei der zweiten Variante wird die verdichtete wässrige Makroemulsion über zwei gegeneinander gerichtete Düsen in eine Mischkammer entspannt. Die Feinverteilungswirkung ist hier vor allem von den hydrodynamischen Verhältnissen in der Mischkammer abhängig. Ein Beispiel für diesen Homogenisatortyp ist der Microfluidizer Typ M 120 E der Microfluidics Corp.. In diesem Hochdruckhomogenisator wird die wässrige Makroemulsion mittels einer pneumatisch betriebenen Kolbenpumpe auf Drücke von bis zu 1200 atm komprimiert und über eine sogenannte "interaction chamber" entspannt. In der "interaction chamber" wird der Emulsionsstrahl in einem Mikrokanalsystem in zwei Strahlen aufgeteilt, die unter einem Winkel von 180°aufeinandergeführt werden. Ein weiteres Beispiel für einen nach dieser Homogenisierungsart arbeitenden Homogenisator ist der Nanojet Typ Expo der Nanojet Engineering GmbH. Allerdings sind beim Nanojet anstatt eines festen Kanalsystems zwei Homogenisierventile eingebaut, die mechanisch verstellt werden können.

Neben den zuvor erläuterten Prinzipien kann die Homogenisierung aber z.B. auch durch Anwendung von Ultraschall (z.B. Branson Sonifier II 450) erfolgen. Die Feinverteilung beruht hier auf Kavitationsmechanismen. Für die Homogenisierung mittels Ultraschall sind grundsätzlich auch die in der GB-A 22 50 930 und der US 5,108,654 beschriebenen Vorrichtungen geeignet. Die Qualität der im Schallfeld erzeugten wässrigen Emulsion E1 hängt dabei nicht nur von der eingebrachten Schallleistung, sondern auch von anderen Faktoren, wie z.B. der Intensitätsverteilung des Ultraschalls in der Mischkammer, der Verweilzeit, der Temperatur und den physikalischen Eigenschaften der zu emulgierenden Stoffe, beispielsweise von der Zähigkeit, der Grenzflächenspannung und dem Dampfdruck ab. Die resultierende Tröpfchengröße hängt dabei u. a. von der Konzentration des Emulgators sowie von der bei der Homogenisierung eingetragenen Energie ab und ist daher z.B. durch entsprechende Veränderungen des Homogenisierungsdrucks bzw. der entsprechenden Ultraschallenergie gezielt einstellbar.

Für die Herstellung der erfindungsgemäßen Emulsion aus konventionellen Emulsionen mittels Ultraschall hat sich insbesondere die in DE-A 197 56 874 beschriebene Vorrichtung bewährt, auf die hiermit ausdrücklich Bezug genommen wird.

Besonders vorteilhaft ist das Mittel zum Übertragen von Ultraschallwellen als Sonotrode ausgebildet, deren der freien Abstrahlfläche abgewandtes Ende mit einem Ultraschallwandler gekoppelt ist. Die Ultraschallwellen können beispielsweise durch Ausnutzung des umgekehrten piezoelektrischen Effekts erzeugt werden. Dabei werden mit Hilfe von Generatoren hochfrequente elektrische Schwingungen (üblicherweise im Bereich von 10 bis 100 kHz, vorzugsweise zwischen 20 und 40 kHz) erzeugt, über einen piezoelektrischen Wandler in mechanische Schwingungen gleicher Frequenz umgewandelt und mit der Sonotrode als Übertragungselement in das zu beschallende Medium eingekoppelt.

Weiterhin kann die Emulsion durch Verdüsung hergestellt werden. Dabei wird die Emulsion nach Maßgabe des Verbrauchs kontinuierlich durch Vermischen ihrer Komponenten mittels einer Mischvorrichtung hergestellt, die wenigstens eine Düse, ausgewählt aus Vollkegeldüse, Hohlkegeldüse, Flachstrahldüse, Glattstrahldüse, Injektordüse, Ejektordüse, Spiraldüse, Prallstrahldüse, Zweistoffdüse oder Emulgierblende aufweist (WO 02/085955).

Zweckmäßig ist es, die Herstellung der Emulsion so schnell durchzuführen, daß die Emulgierzeit klein im Vergleich zur Reaktionszeit der Monomere untereinander und mit Wasser ist.

Eine bevorzugte Ausgestaltung des erfindungsgemäßen Verfahrens besteht darin, das man die Gesamtmenge der Emulsion unter Kühlen auf Temperaturen < RT herstellt. Bevorzugt wird die Emulsionsherstellung in weniger als 10 min bewerkstelligt. Dann wird der Katalysator zugegeben und die gewünschte Reaktionstemperatur eingestellt. Die Reaktionstemperaturen liegen zwischen RT und 120°C, bevorzugt zwischen 50 und 100°C. In einer anderen bevorzugten Ausführungsform wird erst nach Erreichen der Reaktionstemperatur der hydrophobe Katalysator durch die Wasserphase zugegeben.

In einer anderen Variante des erfindungsgemäßen Verfahrens stellt man zunächst aus den Monomeren (a) und (b1) und/oder (b2), Emulgatoren und/oder Schutzkolloiden, sowie gegebenenfalls hydrophoben Zusatz und Wasser die Emulsion her, bevor wiederum der hydrophobe Katalysator zugegeben wird und tropft nach Erreichen des theoretischen NCO-Gehaltes die Monomeren (b3) zu.

Generell werden bei der Erzeugung von Miniemulsionen ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der Organischen Chemie, Band XIV/1, Makromolekulare Stoffe, Georg Thieme Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächeaktiver Substanzen die Einzelkomponenten miteinander verträglich sein, was im Zweifelsfall anhand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestem der Sulfobernsteinsäure sowie Alkali- und/oder -Ammoniumsalze von Alkylsulfaten (Alkylrest: C₈-bis C₁₂), von ethoxylierten Alkanolen (EO-Grad: 4 bis 30, C₉), von Alkylsulfonsäuren (Alkylrest: C₁₂- bis C₁₈) und von Alkylarsulfonsäuren (Alkylrest: C₉- bis C₁₈).

Geeignete Emulgatoren finden sich auch in Houben-Weyl, Methoden der Organischen Chemie Band 14/1, Makromolekulare Stoffe, Georg Thieme Verlag, Stuttgart, 1961, Seiten 192 bis 208.

Handelsnamen von Emulgatoren sind z.B. Dowfak^{®} 2 A1, Emulan^{®} NP 50, Dextrol^{®} OC 50, Lumiten^{®} N-OP 25, Emulphor^{®} OPS 25, Emulan^{®} OG, Texapon^{®} NSO, Nekanil^{®} 904 S, Lumiten^{®} 1-RA, Lumiten^{®} E 3065, Steinapol NLS etc.

Die Emulgatormenge zur Herstellung der wässrigen Emulsion wird erfindungsgemäß zweckmäßig so gewählt, dass in der letztlich resultierenden wässrigen Emulsion innerhalb der wässrigen Phase die kritische Micellbildungskonzentration der verwendeten Emulgatoren im Wesentlichen nicht überschritten wird. Bezogen auf die in der wässrigen Emulsion enthaltende Menge an Monomeren liegt diese Emulgatorenmenge in der Regel im Bereich von 0,1 bis 5 Gew.-%. Wie bereits erwähnt, können den Emulgatoren Schutzkolloide an die Seite gegeben werden, die die disperse Verteilung der letztlich resultierenden wässrigen Polymerisatdispersion zu stabilisieren vermögen. Unabhängig von der eingesetzten Emulgatormenge können die Schutzkolloide in Mengen bis zu 50 Gew.-%, beispielsweise in Mengen von 1 bis 30 Gew.-% bezogen auf die Monomere eingesetzt werden.

Als Costabilisatoren können den Monomeren Stoffe in Mengen von 0,01 bis 10 Gew.-% zugesetzt werden, die eine Löslichkeit in Wasser von < 5 x 10⁻⁵ g/l, bevorzugt 5x10⁻⁷g/l aufweisen. Beispiele sind Kohlenwasserstoffe wie Hexadecan, halogenierte Kohlenwasserstoffe, Silane, Siloxane, hydrophobe Öle (Olivenöl), Farbstoffe etc.. An ihrer Stelle können auch blockierte Polyisocyanate die Funktion des Hydrophobs übernehmen.

Die erfindungsgemäßen Dispersionen werden zur Herstellung von Beschichtungsstoffen, Klebstoffen und Dichtungsmassen verwendet. Sie können auch zur Herstellung von Filmen oder Folien, sowie zum Imprägnieren von z.B. Textilien verwendet werden.

Bei der Verwendung als Beschichtungsmaterial zeigen die erfindungsgemäßen PUR-Dispersionen zeitgleich eine ausgezeichnete Härte sowie eine ausgezeichnete Elastizität. Auf flexiblen Substraten sind Zähigkeit und Dehnbarkeit gewährleistet. Ausserdem lassen sich Materialen herstellen, die ausgezeichnete Wärmestandfestigkeiten erreichen. Bei Einsatz in Klebstoffen kommt noch die hohe Klebfestigkeit hinzu.

Die folgenden Beispiele sollen die Erfindung erläutern, ohne sie jedoch einzuschränken.

Die Bestimmung der mittleren Teilchengröße erfolgte durch quasielektrische Lichtstreuung nach ISO 13321 mit einem Nicomp particle sizer, Model 370, an 0,01 gew.-%igen Proben bestimmt. Die Polydispersität Mw/Mn, der Quotient aus dem gewichtsmittleren und dem zahlenmittleren Molekulargewicht, stellt ein Maß für die Molekulargewichtsverteilung der Polymerisate dar und hat im Idealfall den Wert 1. Die Angaben zur Polydispersität sowie zum zahlenmittleren und gewichtsmittleren Molekulargewicht Mn und Mw beziehen sich hier auf gelpermeationschromatographische Messungen, wobei Polystyrol als Standard und Tetrahydrofuran als Elutionsmittel verwendet wurde. Die Methode ist im Analytiker Taschenbuch Bd. 4, Seiten 433 bis 442 , Berlin 1984 beschrieben.

### Beispiel 1

Es wurden 3,141 g 1-Isocyanato-3,5,5-trimethyl-5-isocyanatomethylcyclohexan (IPDI), 2,859 g pulverisiertes Dodecan-1,12-diol, 200 mg Hexadecan, 200 mg Natriumdodecylsulfat und 24 g Wasser zusammen 1 Stunde bei Raumtemperatur gerührt. Die Miniemulsion wurde durch Beschallen mit einem Branson Sonifter^{®} W-450 hergestellt (120 s mit 90 % Amplitude im Eisbad). Dann wurde die Reaktionstemeratur auf 60°C erhöht und ein Katalysator zugegeben. Die Reaktion wurde nach 4 Stunden beendet. Die Ergebnisse sind in Tabelle 1 zusammengefasst.

**Tabelle 1**

| Nr. | Katalysator | Menge Katalysator [mg] | Teilchengröße [nm] | M_{W} × 10³ | Polydispersitätsindex |
|---|---|---|---|---|---|
| 1 | -- | -- | 175 | 3,75 | 1,8 |
| 2 | DMDA | 25 | 175 | 3,71 | 1,8 |
| 3 | DMTDA | 25 | 165 | 4,05 | 1,8 |
| 4 | DBTDB | 25 | 175 | 3,81 | 1,8 |
| 5 | DBTDH | 25 | 165 | 9,05 | 2,1 |
| 6 | DBTL | 25 | 170 | 7,28 | 2,1 |
| 7 | DOTDL | 25* | 170 | 8,24 | 2,1 |
| 8 | DMDA/DBTDL | 25/25 | 160 | 7,19 | 2,2 |

| | | | | | |
|---|---|---|---|---|---|
| * wurde vor der Emulgierung zugegeben | | | | | |

- DMDA:: Dimethyldodecylamin
- DMTDA:: Dimethylzinn-diacetat
- DBTDB:: Dibutylzinn-dibutyrat
- DBTDH:: Dibutylzinn-bis(2-ethylhexanoat)
- DBTL:: Dibutylzinn-dilaurat
- DOTDL:: Dioctylzinn-dilaurat

### Beispiel 2

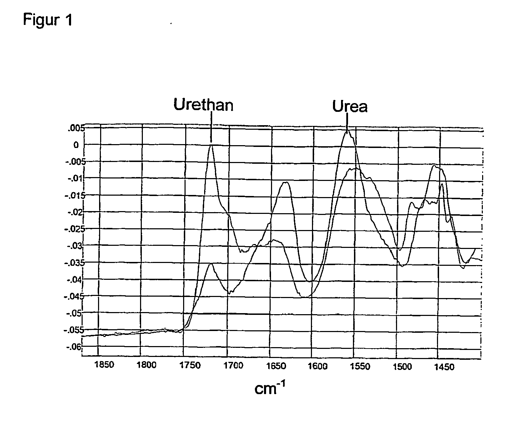

18 g Poly-^{®}THF 1000 (BASF Aktiengesellschaft), 0,5 g Hexadecan und 4 g 1-Isocyanato-3,5,5-trimethyl-5-isocyanatomethylcyclohexan wurden bei Raumtemperatur gemischt und mit 50 g voll entionisiertem Wasser vermischt, dem 6 g Steinapol NLS ^{®}(Goldschmidt AG) zugesetzt worden waren. Die Mischung wurde mit einem Branson Sonifier^{®} W-450 90 s bei 100 % Amplitude und 50 % Puls im Eisbad beschallt. Anschliessend wurde auf 70°C erhitzt und 2 h bei dieser Temperatur gerührt. Von dem Produkt wurde ein IR-Spektrum aufgenommen, das Ergebnis ist in Figur 1 dargestellt (Graph "Urea").

Es zeigt sich eine vermehrte Harnstoffbildung im Vergleich zur katalysierten Reaktionsführung (Beispiel 3).

### Beispiel 3

Der Versuch aus Beispiel 2 wurde wiederholt. Bei Erreichen der Temperatur von 70°C wurden zwei Tropfen DBTL zugegeben und 65 min gerührt.
Von dem Produkt wurde ein IR-Spektrum aufgenommen, das Ergebnis ist in Figur 1 (Graph: "Urethan").

Es zeigt sich eine vermehrte Polyurethanbildung im Vergleich zur unkatalysierten Reaktionsführung (Beispiel 2).

## Patentansprüche

1. Verfahren zur Herstellung von wässrigen Primärdispersionen, die mindestens ein hydrophobes Polyurethan enthalten, welches in Miniemulsion durch Umsetzung von
(a) wenigstens einem Polyisocyanat und
(b) wenigstens einer Verbindung, die mindestens eine Isocyanat-reaktive Gruppe enthält,
erhältlich ist, **dadurch gekennzeichnet, dass** man die Umsetzung in Gegenwart wenigstens eines Katalysators vornimmt.

2. Verfahren nach Anspruch 1, **dadurch gekennzeichnet, dass** man
(1) eine Mischung aus den Monomeren (a) und (b), Emulgatoren und/oder Schutzkolloiden und Wasser herstellt,
(2) eine Emulsion erzeugt,
(3) die Emulsion unter Rühren erwärmt und
(4) den Katalysator über die Wasserphase zugibt
oder
(1) eine Mischung aus den Monomeren (a) und (b), Emulgatoren und/oder Schutzkolloiden und Wasser herstellt,
(2) eine Emulsion erzeugt,
(3) den Katalysator über die Wasserphase zugibt und
(4) die Emulsion unter Rühren erwärmt.

3. Verfahren nach den Ansprüchen 1 und 2, **dadurch gekennzeichnet, dass** man den Katalysator auswählt aus den Gruppen der organischen Amine, der Lewissauren organischen Metallverbindungen und der Metallsalze und/oder Mischungen aus den genannten Gruppen einsetzt.

4. Verfahren nach den Ansprüchen 1 bis 3, **dadurch gekennzeichnet, dass** man als Katalysator sekundäre oder tertiäre aliphatische, cycloaliphatische oder aromatische Amine verwendet.

5. Verfahren nach den Ansprüchen 1 bis 3, **dadurch gekennzeichnet, dass** man als Katalysator Zinn(II)- oder Zinn(IV)-Salze organischer Carbonsäuren verwendet.

6. Verfahren nach den Ansprüchen 1 bis 3, **dadurch gekennzeichnet, dass** man als Katalysator Cäsiumcarboxylate verwendet.

7. Verfahren nach den Ansprüchen 1 bis 6, **dadurch gekennzeichnet, dass** man als Katalysator Dimethyldodecylamin, Dimethylzinn-diacetat, Dibutylzinn-dibutyrat, Dibutylzinn-bis(2-ethylhexanoat), Dibutylzinn-dilaurat, Dioctylzinn-dilaurat, Zirkon-Acetylacetonat, Zirkon-2,2,6,6-tetramethyl-3,5-heptandionat und/oder Cäsiumcarboxylate einsetzt.

8. Verfahren nach den Ansprüchen 1 bis 7, **dadurch gekennzeichnet, dass** man ein hydrophoben Katalysator verwendet.

9. Verfahren nach den Ansprüchen 1 bis 8, **dadurch gekennzeichnet, dass** man 0,001 bis 5 Gew.-% Katalysator, bezogen auf die Gesamtmenge der eingesetzten Monomere, verwendet.

10. Verfahren nach den Ansprüchen 1 bis 9, **dadurch gekennzeichnet, dass** das Verhältnis der Komponente (a) zu Komponente (b) 1:1 beträgt.

11. Verfahren nach den Ansprüchen 1 bis 10, **dadurch gekennzeichnet, dass** die Komponente (a) Diisocyanate enthält.

12. Verfahren nach den Ansprüchen 1 bis 11, **dadurch gekennzeichnet, dass** man als Diisocyanate 1-Isocyanato-3,5,5-trimethyl-5-isocyanatomethylcyclohexan (IPDI), Tetramethylxylylendiisocyanat (TMXDI), Hexamethylendiisocyanat (HDI) sowie Bis-(4-isocyanatocyclohexyl)methan (HMDI) verwendet.

13. Verfahren nach den Ansprüchen 1 bis 12, **dadurch gekennzeichnet, dass** die Komponente (b) Diole enthält.

14. Verfahren nach den Ansprüchen 1 bis 13, **dadurch gekennzeichnet, dass** man, bezogen auf die Gesamtmenge der Diole (b), 20 bis 100 mol-% der Diole (b1) mit einem Molekulargewicht von 60 bis 500 g/mol und 0 bis 80 mol-% der Diole (b2) mit einem Molekulargewicht von 500 bis 5000 g/mol verwendet.

15. Verfahren nach den Ansprüchen 1 bis 14, **dadurch gekennzeichnet, dass** die Komponente (b) aminogruppenhaltige Verbindungen (b3) enthält.

16. Verfahren nach den Ansprüchen 1 bis 15, **dadurch gekennzeichnet, dass** man, bezogen auf die Komponenten (a) und (b), 0 bis 10 mol-% der aminogruppenhaltigen Verbindungen (b3) einsetzt.

17. Verfahren nach den Ansprüchen 1 bis 16, **dadurch gekennzeichnet, dass** man Miniemulsionen mit einer Monomertröpfchengröße von 50 bis 500 nm herstellt.

18. Verfahren nach den Ansprüchen 1 bis 17, **dadurch gekennzeichnet, dass** man Miniemulsionen mit einer Monomertröpfchengröße von 100 bis 300 nm herstellt.

19. Wässrige Primärdispersionen erhältlich nach einem der Ansprüche 1 bis 18.

20. Verwendung der Dispersionen nach Anspruch 19 zur Herstellung von Beschichtungsstoffen, Klebstoffen, Imprägnierungen und Dichtungsmassen.

## Claims

1. A process for preparing an aqueous primary dispersion comprising at least one hydrophobic polyurethane obtainable in miniemulsion by reacting
(a) at least one polyisocyanate and
(b) at least one compound comprising at least one isocyanate-reactive group which comprises performing the reaction in the presence of at least one catalyst.

2. A process as claimed in claim 1, wherein
(1) a mixture of the monomers (a) and (b), emulsifiers and/or protective colloids, and water is prepared,
(2) an emulsion is produced,
(3) the emulsion is heated with stirring, and
(4) the catalyst is added via the water phase
or
(1) a mixture of the monomers (a) and (b), emulsifiers and/or protective colloids, and water is prepared,
(2) an emulsion is produced,
(3) the catalyst is added via the water phase, and
(4) the emulsion is heated with stirring.

3. A process as claimed in claim 1 or 2, wherein the catalyst is selected from the classes of the organic amines, Lewis-acidic organometallic compounds, and metal salts and/or mixtures from said classes.

4. A process as claimed in any of claims 1 to 3, wherein secondary or tertiary aliphatic, cycloaliphatic or aromatic amines are used as catalyst.

5. A process as claimed in any of claims 1 to 3, wherein tin(II) or tin(IV) salts of organic carboxylic acids are used as catalyst.

6. A process as claimed in any of claims 1 to 3, wherein cesium carboxylates are used as catalyst.

7. A process as claimed in any of claims 1 to 6, wherein dimethyldodecylamine, dimethyltin diacetate, dibutyltin dibutyrate, dibutyltin bis(2-ethylhexanoate), dibutyltin dilaurate, dioctyltin dilaurate, zirconium acetylacetonate, zirconium 2,2,6,6-tetramethyl-3,5-heptanedionate and/or cesium carboxylates are used as catalyst.

8. A process as claimed in any of claims 1 to 7, wherein a hydrophobic catalyst is used.

9. A process as claimed in any of claims 1 to 8, wherein from 0.001 to 5% by weight of catalyst is used, based on the total amount of the monomers used.

10. A process as claimed in any of claims 1 to 9, wherein the ratio of component (a) to component (b) is 1:1.

11. A process as claimed in any of claims 1 to 10, wherein component (a) comprises diisocyanates.

12. A process as claimed in any of claims 1 to 11, wherein 1-isocyanato-3,5,5-trimethyl-5-isocyanatomethylcyclohexane (IPDI), tetramethylxylylene diisocyanate (TMXDI), hexamethylene diisocyanate (HDI), and bis-(4-isocyanatocyclohexyl)methane (HMDI) are used as diisocyanates.

13. A process as claimed in any of claims 1 to 12, wherein component (b) comprises diols.

14. A process as claimed in any of claims 1 to 13, wherein, based on the total amount of the diols (b), from 20 to 100 mol% of the diols (b1) having a molecular weight of from 60 to 500 g/mol and from 0 to 80 mol% of the diols (b2) having a molecular weight of from 500 to 5 000 g/mol are used.

15. A process as claimed in any of claims 1 to 14, wherein component (b) comprises amino-containing compounds (b3).

16. A process as claimed in any of claims 1 to 15, wherein, based on components (a) and (b), from 0 to 10 mol% of the amino-containing compounds (b3) are used.

17. A process as claimed in any of claims 1 to 16, wherein miniemulsions having a monomer droplet size of from 50 to 500 nm are prepared.

18. A process as claimed in any of claims 1 to 17, wherein miniemulsions having a monomer droplet size of from 100 to 300 nm are prepared.

19. An aqueous primary dispersion obtainable as claimed in any of claims 1 to 18.

20. The use of a dispersion as claimed in claim 19 for producing coating materials, adhesives, impregnations, and sealants.

## Revendications

1. Procédé de fabrication de dispersions primaires aqueuses, qui contiennent au moins un polyuréthane hydrophobe, qui peut être obtenu en mini-émulsion par mise en réaction de
(a) au moins un polyisocyanate et
(b) au moins un composé qui contient au moins un groupe réactif avec les isocyanates,
**caractérisé en ce que** la réaction est réalisée en présence d'au moins un catalyseur.

2. Procédé selon la revendication 1, **caractérisé en ce que**
(1) un mélange des monomères (a) et (b), d'émulsifiants et/ou de colloïdes protecteurs et d'eau est fabriqué,
(2) une émulsion est formée,
(3) l'émulsion est chauffée sous agitation, et
(4) le catalyseur est ajouté par la phase aqueuse,
ou
(1) un mélange des monomères (a) et (b), d'émulsifiants et/ou de colloïdes protecteurs et d'eau est fabriqué,
(2) une émulsion est formée,
(3) le catalyseur est ajouté par la phase aqueuse, et
(4) l'émulsion est chauffée sous agitation.

3. Procédé selon les revendications 1 et 2, **caractérisé en ce que** le catalyseur est choisi dans les groupes des amines organiques, des composés métalliques organiques acides de Lewis et des sels métalliques et/ou des mélanges des groupes mentionnés sont utilisés.

4. Procédé selon les revendications 1 à 3, **caractérisé en ce que** des amines secondaires ou tertiaires, aliphatiques, cycloaliphatiques ou aromatiques sont utilisées en tant que catalyseur.

5. Procédé selon les revendications 1 à 3, **caractérisé en ce que** des sels d'étain (II) ou d'étain (IV) d'acides carboxyliques organiques sont utilisés en tant que catalyseur.

6. Procédé selon les revendications 1 à 3, **caractérisé en ce que** des carboxylates de césium sont utilisés en tant que catalyseur.

7. Procédé selon les revendications 1 à 6, **caractérisé en ce que** la diméthyldodécylamine, le diacétate de diméthylétain, le dibutyrate de dibutylétain, le bis(2-éthylhexanoate) de dibutylétain, le dilaurate de dibutylétain, le dilaurate de dioctylétain, l'acétylacétonate de zirconium, le 2,2,6,6-tétraméthyl-3,5-heptanedionate de zirconium et/ou des carboxylates de césium sont utilisés en tant que catalyseur.

8. Procédé selon les revendications 1 à 7, **caractérisé en ce qu'**un catalyseur hydrophobe est utilisé.

9. Procédé selon les revendications 1 à 8, **caractérisé en ce que** 0,001 à 5 % en poids de catalyseur, par rapport à la quantité totale des monomères utilisés, est utilisé.

10. Procédé selon les revendications 1 à 9, **caractérisé en ce que** le rapport entre le composant (a) et le composant (b) est de 1:1.

11. Procédé selon les revendications 1 à 10, **caractérisé en ce que** le composant (a) contient des diisocyanates.

12. Procédé selon les revendications 1 à 11, **caractérisé en ce que** du 1-isocyanato-3,5,5-triméthyl-5-isocyanatométhylcyclohexane (IPDI), du diisocyanate de tétraméthylxylylène (IMXDI), du diisocyanate d'hexaméthylène (HDI), ainsi que du bis-(4-isocyanatocyclohexyl)méthane (HMDI) sont utilisés en tant que diisocyanates.

13. Procédé selon les revendications 1 à 12, **caractérisé en ce que** le composant (b) contient des diols.

14. Procédé selon les revendications 1 à 13, **caractérisé en ce que** 20 à 100 % en moles des diols (b1) ayant un poids moléculaire de 60 à 500 g/mol et 0 à 80 % en moles des diols (b2) ayant un poids moléculaire de 500 à 5 000 g/mol sont utilisés par rapport à la quantité totale des diols (b).

15. Procédé selon les revendications 1 à 14, **caractérisé en ce que** le composant (b) contient des composés contenant des groupes amino (b3).

16. Procédé selon les revendications 1 à 15, **caractérisé en ce que** 0 à 10 % en moles des composés contenant des groupes amino (b3) sont utilisés par rapport aux composants (a) et (b).

17. Procédé selon les revendications 1 à 16, **caractérisé en ce que** des mini-émulsions ayant une taille de goutte monomère de 50 à 500 nm sont fabriquées.

18. Procédé selon les revendications 1 à 17, **caractérisé en ce que** des mini-émulsions ayant une taille de goutte monomère de 100 à 300 nm sont fabriquées.

19. Dispersions primaires aqueuses pouvant être obtenues selon l'une quelconque des revendications 1 à 18.

20. Utilisation des dispersions selon la revendication 19 pour la fabrication de matériaux de revêtement, d'adhésifs, d'imprégnations et de matériaux d'étanchéité.
